# EUROPEAN PATENT APPLICATION

(11) **EP 4 685 615 A1**
(43) Date of publication of application: **28.01.2026**
(21) Application number: 24847871.1
(22) Date of filing: 25.06.2024
(51) Int. Cl.: G06F 3/01

(54) **INTERACTION METHOD AND SMART WATCH**

(30) Priority: 02.08.2023 CN 202310970204
(71) Applicant: Huawei Technologies Co., Ltd., Shenzhen, Guangdong 518129 (CN)
(72) Inventor: WU, Yu, Shenzhen, Guangdong 518129 (CN); LUO, Long, Shenzhen, Guangdong 518129 (CN); HAN, Yi, Shenzhen, Guangdong 518129 (CN)
(74) Representative: Goddar, Heinz J.
(86) International application number: PCT/CN2024/101179
(87) International publication number: WO 2025/025909

(57) **Abstract**

This application provides an interaction method and a smartwatch. The method includes: displaying a watch face interface, where the watch face interface includes a first object and a first control; in response to a first operation of a user on the first control, controlling the first object to move forward; detecting an operation of rotating a crown by the user, and determining a rotation direction; when the rotation direction is a first direction, in response to the operation of rotating the crown by the user, enabling the first object to shift leftward while controlling the first object to move forward; and when the rotation direction is a second direction, in response to the operation of rotating the crown by the user, enabling the first object to shift rightward while controlling the first object to move forward. The smartwatch in this application may display, on the watch face interface, an object that can interact with the user. When the user rotates the crown, the smartwatch may control, based on the operation of rotating the crown by the user, the object on the watch face interface to interact with the user. This can enhance interaction between the smartwatch and the user, make interaction more interesting, and help improve user experience.

## Description

This application claims priority to Chinese Patent Application No. 202310970204.7, with the China National Intellectual Property Administration on August 02, 2023 and entitled "INTERACTION METHOD AND SMARTWATCH", which is incorporated herein by reference in its entirety.

### TECHNICAL FIELD

Embodiments of this application relate to the field of electronic devices, and more specifically, to an interaction method and a smartwatch.

### BACKGROUND

Given that a screen of a smartwatch is small, interacting with the smartwatch solely through the screen would make a user experience quite cumbersome. Therefore, the user may interact with the smartwatch by rotating a watch crown. However, currently, a manner of interacting with the smartwatch by rotating the crown is monotonous, - only allowing for switching an interface and adjusting a parameter, which fails to meet user's personalized needs, and underutilizes potential functions of the crown.

### SUMMARY

This application provides an interaction method and a smartwatch. The smartwatch may display, on a watch face interface, an object that can interact with a user. When the user rotates a crown, the smartwatch may control, based on an operation of rotating the crown by the user, the object on the watch face interface to interact with the user. This can enhance interaction between the smartwatch and the user, make interaction more interesting, and help improve user experience.

According to a first aspect, an interaction method is provided. The method is applied to a smartwatch, and the method includes: displaying a watch face interface, where the watch face interface includes a first object and a first control; in response to a first operation of a user on the first control, controlling the first object to move forward; detecting an operation of rotating a crown by the user, and determining a rotation direction; when the rotation direction is a first direction, in response to the operation of rotating the crown by the user, enabling the first object to shift leftward while controlling the first object to move forward; and when the rotation direction is a second direction, in response to the operation of rotating the crown by the user, enabling the first object to shift rightward while controlling the first object to move forward.

In this embodiment of this application, the smartwatch may display, on the watch face interface, an object that can interact with the user. The smartwatch may control, based on the direction in which the user rotates the crown, the object on the watch face interface to interact with the user. This can enhance interaction between the smartwatch and the user, make interaction more interesting, and help improve user experience.

With reference to the first aspect, in some implementations of the first aspect, the first direction is a clockwise direction, and the second direction is a counterclockwise direction.

With reference to the first aspect, in some implementations of the first aspect, the method further includes: displaying a forward movement distance of the first object on the first control.

With reference to the first aspect, in some implementations of the first aspect, the method further includes: in response to a second operation of the user on the first control, controlling the first object to stop moving forward.

With reference to the first aspect, in some implementations of the first aspect, a forward movement speed of the first object increases as movement time increases.

With reference to the first aspect, in some implementations of the first aspect, the method further includes: when the first object stops moving forward, displaying indication information, where the indication information indicates a movement distance of the first object.

According to a second aspect, an interaction method is provided. The method is applied to a smartwatch, and the method includes: displaying a watch face interface, where the watch face interface includes a first object; and in response to an operation of rotating a crown by a user, controlling the first object to swing forward and backward.

With reference to the second aspect, in some implementations of the second aspect, the method further includes: detecting a rotation angle of the crown; and in response to the operation of rotating the crown by the user, controlling the first object to swing forward and backward includes: determining a swinging speed based on the rotation angle, and controlling the first object to swing forward and backward at the swinging speed.

In this embodiment of this application, the smartwatch may display, on the watch face interface, an object that can interact with the user. The smartwatch may control, based on the operation of rotating the crown by the user, the object on the watch face interface to interact with the user. This can enhance interaction between the smartwatch and the user, make interaction more interesting, and help improve user experience.

With reference to the second aspect, in some implementations of the second aspect, the method further includes: detecting that the user no longer rotates the crown, and controlling the first object to stop swinging forward and backward.

According to a third aspect, an interaction method is provided. The method is applied to a smartwatch, and the method includes: displaying a watch face interface, where the watch face interface includes a clock, numbers on the clock are classified into n groups of number groups, the n groups of number groups include a first number group and a second number group, a size of a number in the first number group is greater than a size of a number in the second number group and/or brightness of the number in the first number group is greater than brightness of the number in the second number group, and n≥2 and is an integer; and when the size of the number in the first number group is greater than the size of the number in the second number group, in response to an operation of rotating a crown by a user, adjusting the n groups of number groups, to enable the size of the number in the second number group to be greater than the size of the number in the first number group; or when the brightness of the number in the first number group is greater than the brightness of the number in the second number group, in response to an operation of rotating a crown by a user, adjusting the n groups of number groups, to enable the brightness of the number in the second number group to be greater than the brightness of the number in the first number group; or when the size of the number in the first number group is greater than the size of the number in the second number group, and the brightness of the number in the first number group is greater than the brightness of the number in the second number group, in response to an operation of rotating a crown by a user, adjusting the n groups of number groups, to enable the size of the number in the second number group to be greater than the size of the number in the first number group, and the brightness of the number in the second number group to be greater than the brightness of the number in the first number group.

In this embodiment of this application, the smartwatch may display, on the watch face interface, an object that can interact with the user. The smartwatch may control, based on the operation of rotating the crown by the user, the object on the watch face interface to interact with the user. This can enhance interaction between the smartwatch and the user, make interaction more interesting, and help improve user experience.

With reference to the third aspect, in some implementations of the third aspect, n≥3, and the n groups of number groups further include a third number group. Before the n groups of number groups are adjusted, a size of a number in the third number group is greater than the size of the number in the second number group and less than the size of the number in the first number group and/or brightness of the number in the third number group is greater than the brightness of the number in the second number group and less than the brightness of the number in the first number group. After the n groups of number groups are adjusted, the size of the number in the second number group is greater than the size of the number in the first number group, and the size of the number in the first number group is greater than the size of the number in the third number group. Alternatively, the brightness of the number in the second number group is greater than the brightness of the number in the first number group, and the brightness of the number in the first number group is greater than the brightness of the number in the third number group. Alternatively, the size of the number in the second number group is greater than the size of the number in the first number group, the size of the number in the first number group is greater than the size of the number in the third number group, the brightness of the number in the second number group is greater than the brightness of the number in the first number group, and the brightness of the number in the first number group is greater than the brightness of the number in the third number group.

With reference to the third aspect, in some implementations of the third aspect, before the n groups of number groups are adjusted, the number in the first number is superimposed on the number in the third number group, the number in the third number group is superimposed on the number in the second number group, and after the n groups of number groups are adjusted, the number in the second number is superimposed on the number in the first number group, and the number in the first number group is superimposed on the number in the third number group.

With reference to the third aspect, in some implementations of the third aspect, the method further includes: detecting a rotation angle of the crown; and in response to the operation of rotating the crown by the user, adjusting the n groups of number groups includes: when the rotation angle is greater than a first threshold, in response to the operation of rotating the crown by the user, adjusting the n groups of number groups.

With reference to the third aspect, in some implementations of the third aspect, the method further includes: in a process of adjusting the n groups of numbers, brightness and/or sizes of numbers in the n groups of number groups gradually change.

According to a fourth aspect, an interaction method is provided. The method is applied to a smartwatch, and the method includes: displaying a watch face interface, where the watch face interface includes clock hands and a first pattern; and in response to an operation of rotating a crown by a user, canceling display of the clock hands and adjusting a size of the first pattern based on a rotation direction.

In this embodiment of this application, the smartwatch may display, on the watch face interface, an object that can interact with the user. The smartwatch may control, based on the direction in which the user rotates the crown, the object on the watch face interface to interact with the user. This can enhance interaction between the smartwatch and the user, make interaction more interesting, and help improve user experience.

With reference to the fourth aspect, in some implementations of the fourth aspect, the first pattern is a floral pattern, and adjusting the size of the first pattern based on the rotation direction includes: adjusting open and closed states of the floral pattern based on the rotation direction, where a size of the closed floral pattern is less than a size of the open floral pattern.

With reference to the fourth aspect, in some implementations of the fourth aspect, in response to the operation of rotating the crown by the user, adjusting the size of the first image based on the rotation direction includes: when the rotation direction is a first direction, increasing the size of the first image, and when the rotation direction is a second direction, decreasing the size of the first image.

With reference to the fourth aspect, in some implementations of the fourth aspect, the first direction is a clockwise direction, and the second direction is a counterclockwise direction.

With reference to the fourth aspect, in some implementations of the fourth aspect, the method further includes: when it is detected that the user no longer rotates the crown, displaying the clock hands.

According to a fifth aspect, an interaction method is provided. The method is applied to a smartwatch, and the method includes: displaying a watch face interface, where the watch face interface includes a first object and a first control; in response to a first operation of a user on the first control, controlling the first object to move forward; detecting an operation of rotating a crown by the user, and determining a rotation direction; when the rotation direction is a first direction, in response to the operation of rotating the crown by the user, controlling the first object to accelerate forward movement; and when the rotation direction is a second direction, in response to the operation of rotating the crown by the user, controlling the first object to decelerate forward movement.

In this embodiment of this application, the smartwatch may display, on the watch face interface, an object that can interact with the user. The smartwatch may control, based on the direction in which the user rotates the crown, the object on the watch face interface to interact with the user. This can enhance interaction between the smartwatch and the user, make interaction more interesting, and help improve user experience.

With reference to the fifth aspect, in some implementations of the fifth aspect, the first direction is a clockwise direction, and the second direction is a counterclockwise direction.

With reference to the fifth aspect, in some implementations of the fifth aspect, the method further includes: displaying a movement speed of the first object on the first control.

According to a sixth aspect, an interaction method is provided. The method is applied to a smartwatch, and the method includes: displaying a watch face interface, where the watch face interface includes a first object; detecting an operation of rotating a crown by a user, and determining a rotation direction; when the rotation direction is a first direction, in response to the operation of rotating the crown by the user, enabling the first object to shift leftward while controlling the first object to move forward; and when the rotation direction is a second direction, in response to the operation of rotating the crown by the user, enabling the first object to shift rightward while controlling the first object to move forward.

In this embodiment of this application, the smartwatch may display, on the watch face interface, an object that can interact with the user. The smartwatch may control, based on the direction in which the user rotates the crown, the object on the watch face interface to interact with the user. This can enhance interaction between the smartwatch and the user, make interaction more interesting, and help improve user experience.

According to a seventh aspect, a smartwatch is provided, including one or more processors and one or more memories. The one or more memories store one or more computer programs, and the one or more computer programs include instructions. When the instructions are executed by the one or more processors, the smartwatch is enabled to perform the first aspect or any possible implementation of the first aspect.

According to an eighth aspect, a computer-readable storage medium is provided. The computer-readable storage medium includes a computer program or instructions. When the computer program or the instructions are run on a computer, the method according to the first aspect and any possible implementation of the first aspect is performed.

According to a ninth aspect, a computer program product is provided. The computer program product includes a computer program or instructions. When the computer program or the instructions are run on a computer, the method according to the first aspect and any possible implementation of the first aspect is performed.

According to a tenth aspect, a computer program is provided. When the computer program is run on a computer, the method according to the first aspect and any possible implementation of the first aspect is performed.

According to an eleventh aspect, a smartwatch is provided. The smartwatch includes modules/units for performing the method according to the foregoing aspects or any possible design of the foregoing aspects. The modules/units may be implemented by hardware, or may be implemented by hardware executing corresponding software.

According to a twelfth aspect, an embodiment of this application provides a graphical user interface on a smartwatch. The smartwatch has a display, one or more memories, and one or more processors. The one or more processors are configured to execute one or more computer programs stored in the one or more memories. The graphical user interface includes a graphical user interface displayed when the smartwatch performs any technical solution according to the foregoing aspects or any possible design of the foregoing aspects.

For beneficial effects of the seventh aspect to the twelfth aspect, refer to the beneficial effects of the first aspect. Details are not described herein again.

### BRIEF DESCRIPTION OF DRAWINGS

FIG. 1 is a diagram of a structure of a smartwatch according to an embodiment of this application;
FIG. 2 is a block diagram of a software structure of a smartwatch according to an embodiment of this application;
FIG. 3 shows a group of GUIs according to an embodiment of this application;
FIG. 4 shows a group of GUIs according to an embodiment of this application;
FIG. 5 shows a group of GUIs according to an embodiment of this application;
FIG. 6 shows a group of GUIs according to an embodiment of this application;
FIG. 7 shows a group of GUIs according to an embodiment of this application;
FIG. 8 shows a group of GUIs according to an embodiment of this application;
FIG. 9 is a schematic flowchart of an interaction method according to an embodiment of this application;
FIG. 10 is a schematic flowchart of an interaction method according to an embodiment of this application;
FIG. 11 is a schematic flowchart of an interaction method according to an embodiment of this application;
FIG. 12 is a schematic flowchart of an interaction method according to an embodiment of this application;
FIG. 13 is a schematic flowchart of an interaction method according to an embodiment of this application; and
FIG. 14 is a schematic flowchart of an interaction method according to an embodiment of this application.

### DESCRIPTION OF EMBODIMENTS

The following describes technical solutions in embodiments of this application with reference to accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include plural forms such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

The following describes a smartwatch, a user interface used for the smartwatch, and embodiments used for using the smartwatch.

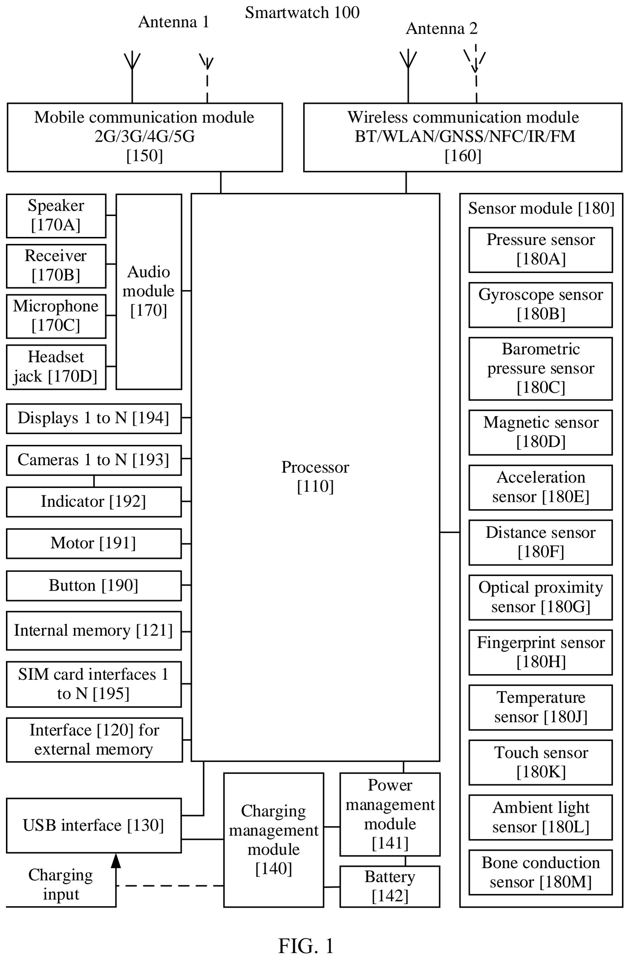

For example, FIG. 1 is a diagram of a structure of a smartwatch 100. The smartwatch 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the smartwatch 100. In some other embodiments of this application, the smartwatch 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

A controller may be a nerve center and a command center of the smartwatch 100. The controller may generate an operation control signal based on an instruction operation code and a timing signal, to complete control of instruction fetching and instruction execution.

A memory may be further disposed in the processor 110, and is configured to store instructions and data. In some embodiments, the memory in the processor 110 is a cache. The memory may store instructions or data that has been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the smartwatch 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the smartwatch 100 may be configured to cover one or more communication bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the smartwatch 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal through an audio device (which is not limited to the speaker 170A, the receiver 170B, or the like), or displays an image or a video by the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the smartwatch 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the smartwatch 100, the antenna 1 and the mobile communication module 150 are coupled, and the antenna 2 and the wireless communication module 160 are coupled, so that the smartwatch 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The smartwatch 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the smartwatch 100 may include one or N displays 194, where N is a positive integer greater than 1.

The smartwatch 100 may implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the smartwatch 100 may include one or N cameras 193, where N is a positive integer greater than 1.

The digital signal processor is configured to process a digital signal, and may process another digital signal in addition to the digital image signal. For example, when the smartwatch 100 selects a frequency, the digital signal processor is configured to perform Fourier transform on energy of the frequency.

The video codec is configured to compress or decompress a digital video. The smartwatch 100 may support one or more video codecs. Therefore, the smartwatch 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information with reference to a structure of a biological neural network, for example, a mode of transfer between human brain neurons, and may further continuously perform self-learning. The NPU can implement applications such as intelligent cognition of the smartwatch 100, for example, image recognition, facial recognition, speech recognition, and text understanding.

The interface 120 for external memory may be configured to connect to an external storage card, for example, a micro SD card, to extend a storage capability of the smartwatch 100. The external storage card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the smartwatch 100 and data processing. The internal memory 121 may include a program storage area and a data storage area. The program storage area may store an operating system, an application required by at least one function (for example, a sound playing function or an image playing function), and the like. The data storage area may store data (such as audio data and an address book) and the like created during use of the smartwatch 100. In addition, the internal memory 121 may include a high-speed random access memory, or may include a nonvolatile memory, for example, at least one magnetic disk storage device, a flash memory, or a universal flash storage (universal flash storage, UFS).

The smartwatch 100 may implement an audio function such as music playing and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The smartwatch 100 may listen to music or answer a call in a hands-free mode over the speaker 170A.

The receiver 170B, also referred to as an "earpiece", is configured to convert an electrical audio signal into a sound signal. When the smartwatch 100 receives a call or a voice message, the receiver 170B can be placed close to a human ear for the voice to be heard.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the smartwatch 100. In some other embodiments, two microphones 170C may be disposed in the smartwatch 100, to implement a noise reduction function in addition to capturing a sound signal. In some other embodiments, three, four, or more microphones 170C may alternatively be disposed in the smartwatch 100, to capture a sound signal, implement noise reduction, and identify a sound source, to implement a directional recording function, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The smartwatch 100 determines pressure intensity based on a change of the capacitance. When a touch operation is performed on the display 194, the smartwatch 100 detects intensity of the touch operation by using the pressure sensor 180A. The smartwatch 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is greater than or equal to a first pressure threshold is performed on an icon of an alarm clock application, an instruction for creating an alarm clock is executed.

The fingerprint sensor 180H is configured to collect a fingerprint. The smartwatch 100 may use a feature of the collected fingerprint to implement fingerprint-based unlocking, application lock access, fingerprint-based photographing, fingerprint-based call answering, and the like. For example, when a mobile phone detects a touch operation of a user on a lock screen interface, the mobile phone may collect fingerprint information of the user through the fingerprint sensor 180H, and match the collected fingerprint information with fingerprint information preset in the mobile phone. If matching succeeds, the mobile phone may enter a non-lock screen interface from the lock screen interface.

The touch sensor 180K is also referred to as a "touch panel". The touch sensor 180K may be disposed on the display 194, and the touch sensor 180K and the display 194 constitute a touchscreen, which is also referred to as a "touch control screen". The touch sensor 180K is configured to detect a touch operation performed on or near the touch sensor 180K. The touch sensor may transfer the detected touch operation to the application processor, to determine a type of the touch event. A visual output related to the touch operation may be provided through the display 194. In some other embodiments, the touch sensor 180K may alternatively be disposed on a surface of the smartwatch 100 in a position different from that of the display 194.

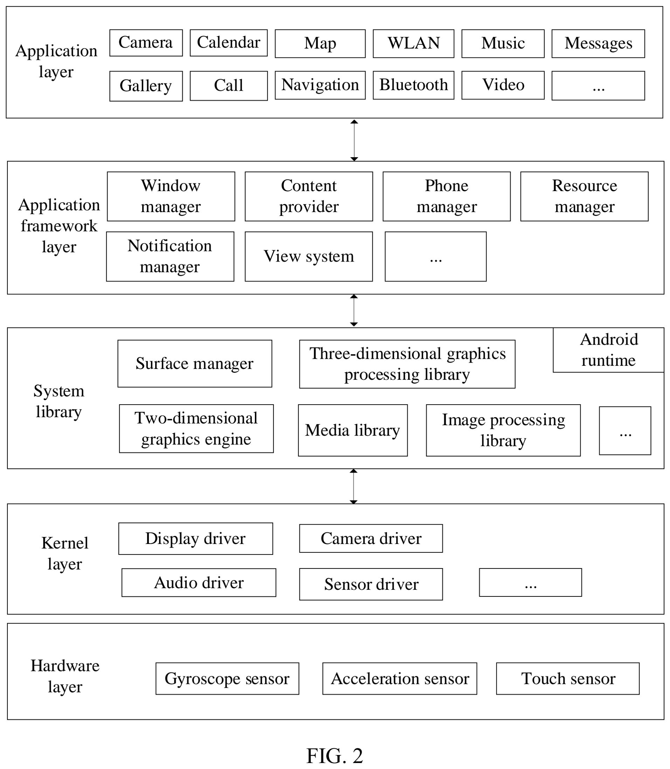

FIG. 2 is a block diagram of a software structure of the smartwatch 100 in embodiments of this application. In a layered architecture, software is divided into several layers, and each layer has a clear role and task. The layers communicate with each other through a software interface. In some embodiments, an Android system is divided into four layers from top to bottom: an application layer, an application framework layer, an Android runtime (Android runtime) and system library, and a kernel layer. The application layer may include a series of application packages.

As shown in FIG. 2, the application layer may include Camera, Settings, a third-party application, and the like. The third-party application may include Gallery, Calendar, Call, Map, Navigation, WLAN, Bluetooth, Music, Video, Messages, and the like.

The application framework layer provides an application programming interface (application programming interface, API) and a programming framework for an application at the application layer. The application framework layer may include some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes a visual control, like a control for displaying a text or a control for displaying a picture, for example, displaying indication information for prompting a virtual shutter button in this embodiment of this application. The view system may be configured to construct an application. A display interface may include one or more views. For example, the display interface including a short message service message notification icon may include a view for displaying a text and a view for displaying a picture.

The phone manager is configured to provide a communication function for the smartwatch 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message that may automatically disappear after a short pause without requiring user interaction. For example, the notification manager is configured to notify download completion, provide a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is played, the smartwatch vibrates, or an indicator blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide a fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D drawing.

In addition, the system library may further include a status monitoring service module, for example, a physical status recognition module, configured to analyze and recognize a user gesture; and a sensor service module, configured to monitor sensor data uploaded by various sensors at a hardware layer, to determine a physical status of the smartwatch 100.

The kernel layer is a layer between hardware and software. The kernel layer includes at least a display driver, a camera driver, an audio driver, and a sensor driver.

The hardware layer may include various types of sensors, for example, various types of sensors described in FIG. 1, and an acceleration sensor, a gyroscope sensor, a touch sensor, and the like in embodiments of this application.

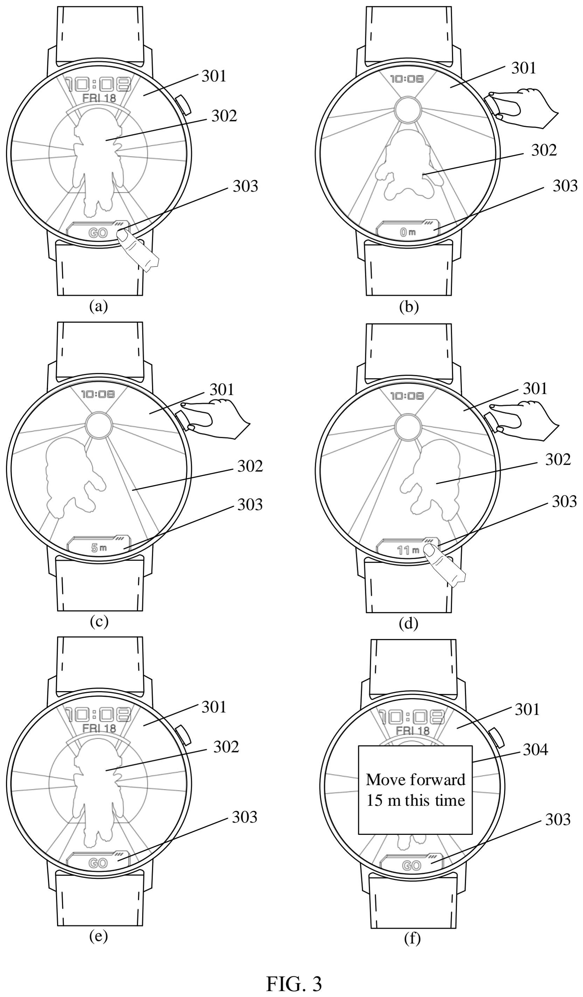

Because a screen of the smartwatch is small, if a user interacts with the smartwatch only by using the screen, an operation of the user is very inconvenient. Therefore, the user may interact with the smartwatch by rotating a watch crown. However, currently, a manner of interacting with the smartwatch by rotating the crown is monotonous, - only allowing for switching an interface and adjusting a parameter, which fails to meet user's personalized needs, and underutilizes potential functions of the crown. In view of this, an embodiment of this application provides an interaction method. When rotating the crown, the user may interact with an element on a watch face interface. This increases interest and helps improve user experience. The following first describes the interaction method provided in this embodiment of this application with reference to graphical user interfaces (graphical user interface, GUI) shown in FIG. 3 to FIG. 8.

FIG. 3 shows a group of GUIs according to an embodiment of this application.

As shown in (a) in FIG. 3, the smartwatch displays an interface 301, and the interface 301 is the watch face interface. The interface 301 includes an object 302 and a control 303. When detecting an operation of tapping the control 303 by the user, in response to the operation, the smartwatch may display a GUI shown in (b) in FIG. 3.

As shown in (b) in FIG. 3, in response to the operation of tapping the control 303 by the user, the smartwatch controls the object 302 to move forward.

It should be noted that in the GUIs shown in FIG. 3, controlling the object 302 to move forward means to control the object 302 to move toward a depth direction of the smartwatch, which may also be referred to as a thickness direction of the smartwatch. The depth direction is a direction that is at a specific angle with the screen of the smartwatch. For example, the angle may be 90°, that is, the depth direction may be a direction perpendicular to the screen of the smartwatch.

It should be further noted that a pointing direction of the depth direction is not limited in embodiments of this application, and the depth direction may point to the outside of the screen, or may point to the inside of the screen. For example, the depth direction is perpendicular to the screen of the smartwatch and outward, or the depth direction is perpendicular to the screen of the smartwatch and inward.

It may be understood that, in the GUI shown in (b) in FIG. 3, the depth direction points to the inside of the screen. In some other embodiments of this application, the depth direction may also point to the outside of the screen. When the depth direction points to the outside of the screen, controlling the object 302 to move forward may also mean to control the object 302 to move in a direction outside the screen, so that the user can sense effect that the object 302 is to move out of the screen.

Optionally, in some embodiments, the smartwatch may display, on the control 303, a forward movement distance of the object 302.

Optionally, in some embodiments, the smartwatch may display, on the control 303, a movement speed of the object 302.

Optionally, in some embodiments, when the smartwatch controls the object 302 to move forward, the object 302 is located in a middle position of the screen.

As shown in (c) and (d) in FIG. 3, when the object 302 moves forward, the smartwatch detects an operation of rotating the crown by the user, may determine a rotation direction, and control a shift direction of the object 302 based on the rotation direction. When determining that the rotation direction is a first direction, the smartwatch may control the object 302 to shift leftward, that is, display a GUI shown in (c) in FIG. 3. When determining that the rotation direction is a second direction, the smartwatch may control the object 302 to shift rightward, that is, display a GUI shown in (d) in FIG. 3.

In some embodiments, the first direction is a clockwise direction, and the second direction is a counterclockwise direction.

In some other embodiments, the first direction is a counterclockwise direction, and the second direction is a clockwise direction.

Optionally, in some embodiments, when the smartwatch controls the object 302 to move forward, the movement speed of the object 302 is a fixed value. The fixed value may be preset, or may be set by the user.

Optionally, in some embodiments, when the smartwatch controls the object 302 to move forward, a forward movement speed may increase as movement time increases.

For example, the smartwatch controls the object 302 to move forward, and a speed of the object 302 is 2 m/s at the 1^{st} second, and is 3 m/s at the 2^{nd} second.

Optionally, in some embodiments, when the smartwatch controls the object 302 to move forward, a forward movement speed may decrease as movement time increases.

For example, the smartwatch controls the object 302 to move forward, and a speed of the object 302 is 3 m/s at the 1^{st} second, and is 2 m/s at the 2^{nd} second.

It should be noted that when increasing or decreasing the movement speed of the object 302, the smartwatch may reflect a change of the movement speed of the object 302 by changing animation effect.

As shown in (d) and (e) in FIG. 3, when controlling the object 302 to move forward, the smartwatch detects the operation of tapping the control 303 by the user, and in response to the operation, the smartwatch may control the object 302 to stop moving forward.

There may be two possible implementations for controlling the object 302 to stop moving forward.

In a possible implementation, the object 302 is controlled to immediately stop moving forward.

In a possible implementation, the object 302 is controlled to gradually stop moving forward.

As shown in (f) in FIG. 3, when controlling the object 302 to stop moving forward, the smartwatch may further display a prompt box 504, and display indication information in the prompt box 504. The indication information indicates a movement distance of the object 302.

It should be noted that in the GUIs shown in FIG. 3, the object 302 is merely an example of a figure image, and should not be understood as a specific limitation on embodiments of this application. For example, the object 302 may also be an animal image.

In this embodiment of this application, the smartwatch may display, on the watch face interface, an object that can interact with the user. The smartwatch may control, based on the direction in which the user rotates the crown, the object on the watch face interface to interact with the user. This can enhance interaction between the smartwatch and the user, make interaction more interesting, and help improve user experience.

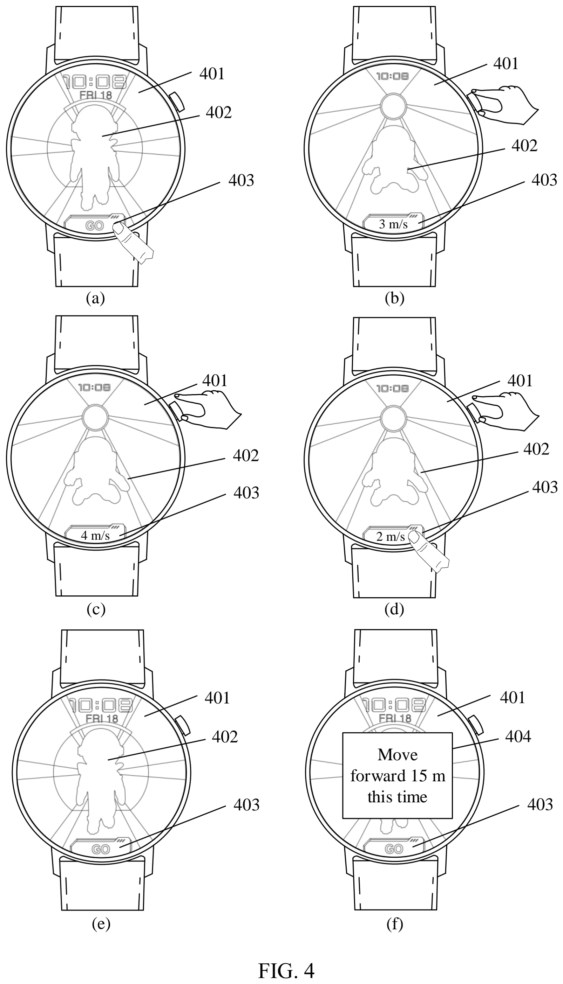

FIG. 4 shows a group of GUIs according to an embodiment of this application.

As shown in (a) in FIG. 4, the smartwatch displays an interface 401, and the interface 401 is the watch face interface. The interface 401 includes an object 402 and a control 403. When detecting an operation of tapping the control 403 by the user, in response to the operation, the smartwatch may display a GUI shown in (b) in FIG. 4.

As shown in (b) in FIG. 4, in response to an operation of tapping the control 403 by the user, the smartwatch controls the object 402 to move forward.

It should be noted that in the GUIs shown in FIG. 4, controlling the object 402 to move forward means to control the object 402 to move toward a depth direction of the smartwatch.

Optionally, in some embodiments, the smartwatch may display, on the control 403, a movement speed of the object 302.

As shown in (c) and (d) in FIG. 4, when the object 402 moves forward, the smartwatch detects an operation of rotating the crown by the user, may determine a rotation direction, and control, based on the rotation direction, the object 402 to accelerate or decelerate. When determining that the rotation direction is a first direction, the smartwatch may control the object 402 to accelerate, that is, display a GUI shown in (c) in FIG. 4. When determining that the rotation direction is a second direction, the smartwatch may control the object 402 to decelerate, that is, display a GUI shown in (d) in FIG. 4.

In some embodiments, the first direction is a clockwise direction, and the second direction is a counterclockwise direction.

In some other embodiments, the first direction is a counterclockwise direction, and the second direction is a clockwise direction.

It may be understood that in the example shown in FIG. 4, when the user does not rotate the crown, the movement speed of the object 402 may be a fixed value. The fixed value may be preset, or may be set by the user.

As shown in (d) and (e) in FIG. 4, when controlling the object 402 to move forward, the smartwatch detects the operation of tapping the control 403 by the user, and in response to the operation, the smartwatch may control the object 402 to stop moving forward.

As shown in (f) in FIG. 4, when controlling the object 402 to stop moving forward, the smartwatch may further display a prompt box 404, and display indication information in the prompt box 404. The indication information indicates a movement distance of the object 402.

In this embodiment of this application, the smartwatch may display, on the watch face interface, an object that can interact with the user. The smartwatch may control, based on the direction in which the user rotates the crown, the object on the watch face interface to interact with the user. This can enhance interaction between the smartwatch and the user, make interaction more interesting, and help improve user experience.

Alternatively, in the GUIs shown in FIG. 4, a movement direction of the object 402 is the depth direction of the smartwatch. However, this is not limited in embodiments of this application. In some other embodiments of this application, the object 402 may move in a two-dimensional plane. For example, in response to the operation of tapping the control 403 by the user, the smartwatch may control the object 402 to move rightward. When detecting the operation of rotating the crown by the user, the smartwatch may determine the rotation direction. When the rotation direction is the first direction, the object 402 is controlled to accelerate, and when the rotation direction is the second direction, the object 402 is controlled to decelerate. For another example, in response to the operation of tapping the control 403 by the user, the smartwatch may control the object 402 to move rightward. When detecting the operation of rotating the crown by the user, the smartwatch may determine the rotation direction. When the rotation direction is the first direction, the smartwatch controls the object 402 to jump up, and when the rotation direction is the second direction, the smartwatch controls the object 402 to squat.

In the GUIs shown in FIG. 3, the smartwatch needs to respond to the operation of tapping the control 303 by the user, and control the object 302 to move forward. In some other embodiments of this application, when detecting that the user rotates the crown, the smartwatch may also control an object in the watch face interface to move forward, and control, based on the rotation direction, the object in the watch face interface to shift leftward or rightward.

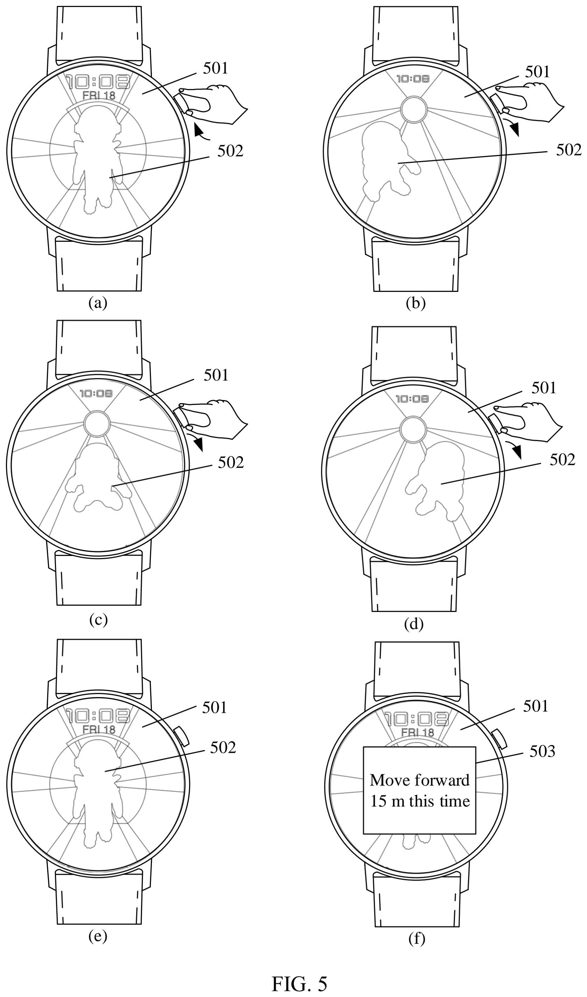

FIG. 5 shows a group of GUIs according to an embodiment of this application.

As shown in (a) in FIG. 5, the smartwatch displays an interface 501, and the interface 501 is the watch face interface. The interface 501 includes an object 302. The smartwatch detects an operation of rotating the crown by the user, and may determine a rotation direction. When determining that the rotation direction is a first direction, the smartwatch displays a GUI shown in (b) in FIG. 5.

As shown in (b) in FIG. 5, in response to the operation of rotating the crown by the user, and when the rotation direction is the first direction, the smartwatch enables the object 502 to shift leftward while controlling the object 502 to move forward.

As shown in (b) to (d) in FIG. 5, when detecting that the rotation direction of the user changes to a second direction, the smartwatch may enable the object 502 to shift rightward while controlling the object 502 to move forward. Because the smartwatch first controls the object 502 to shift leftward, when the smartwatch controls the object 502 to shift rightward, the object 502 first moves to a middle position of the screen, that is, a position shown in (c) in FIG. 5, and then moves to a right position of the screen, that is, a position shown in (d) in FIG. 5.

In (a) to (d) in FIG. 5, the first direction is a clockwise direction, and the second direction is a counterclockwise direction, but this is not limited thereto. In some other embodiments, the first direction is a counterclockwise direction, and the second direction is a clockwise direction.

When detecting that a preset condition is met, the smartwatch may control the object 502 to stop moving forward.

As shown in (e) in FIG. 5, the smartwatch may control the object 502 to stop moving forward.

As shown in (f) in FIG. 5, when controlling the object 502 to stop moving forward, the smartwatch may further display a prompt box 503, and display indication information in the prompt box 503. The indication information indicates a movement distance of the object 502.

For example, the preset condition is that the smartwatch detects that the user no longer touches the crown.

For example, the preset condition is that the smartwatch detects that time during which the user stops rotating the crown reaches a threshold.

In this embodiment of this application, the smartwatch may display, on the watch face interface, an object that can interact with the user. The smartwatch may control, based on the direction in which the user rotates the crown, the object on the watch face interface to interact with the user. This can enhance interaction between the smartwatch and the user, make interaction more interesting, and help improve user experience.

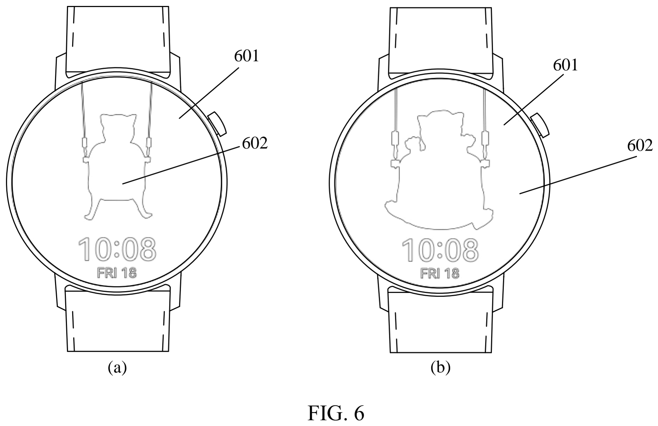

FIG. 6 shows a group of GUIs according to an embodiment of this application.

As shown in (a) and (b) in FIG. 6, the smartwatch displays an interface 601, and the interface 601 is the watch face interface. The interface 601 includes an object 602. The smartwatch detects an operation of rotating the crown by the user, and in response to the operation, the smartwatch may control the object 602 to swing forward and backward.

It should be noted that in the GUIs shown in FIG. 6, controlling the object 602 to swing forward and backward means to control the object 602 to swing toward a depth direction of the smartwatch. For descriptions of the depth direction, refer to the foregoing descriptions. For brevity, details are not described herein again.

Optionally, in some embodiments, when detecting the operation of rotating the crown by the user, the smartwatch may further determine a rotation angle, and determine a swinging speed of the object 602 based on the rotation angle.

Table 1 lists correspondences between rotation angles and swinging speeds. After determining the rotation angle, the smartwatch may determine a corresponding swinging speed based on Table 1.

It may be understood that as the user continuously rotates the crown, the smartwatch may gradually increase the swinging speed of the object 602.

**Table 1: Table of the correspondences between rotation angles and swinging speeds**

| Rotation angle/° | Swinging speed rad/s |
|---|---|
| (0°, 30°] | 1 |
| (30°, 60°] | 2 |
| (60°, 90°] | 3 |
| (90°, 120°] | 4 |
| (120°, 150°] | 5 |
| (150°, 180°] | 6 |
| (180°, 210°] | 7 |
| (210°, 240°] | 8 |
| (240°, 270°] | 9 |
| (270°, 300°] | 10 |
| (300°, 330°] | 11 |
| (330°, 360°] | 12 |

It should be noted that the correspondences between the rotation angles and the swinging speeds listed in Table 1 are merely examples, and should not be construed as specific limitations on embodiments of this application.

It should be further noted that Table 1 lists corresponding swinging speeds when the rotation angle is (0°, 360°]. When the rotation angle of the user is greater than 360°, the smartwatch may keep the swinging speed of the object 602 at 12 rad/s, or may continue to increase the swinging speed of the object 602. This is not limited in embodiments of this application.

Optionally, in some embodiments, when detecting that the user stops rotating the crown, the smartwatch may control the object 602 to stop swinging forward and backward.

There may be two possible implementations for controlling the object 602 to stop moving forward.

In a possible implementation, the object 602 is controlled to immediately stop swinging forward and backward.

In a possible implementation, the object 302 is controlled to gradually stop swinging forward and backward.

In this embodiment of this application, the smartwatch may display, on the watch face interface, an object that can interact with the user. The smartwatch may control, based on the operation of rotating the crown by the user, the object on the watch face interface to interact with the user. This can enhance interaction between the smartwatch and the user, make interaction more interesting, and help improve user experience.

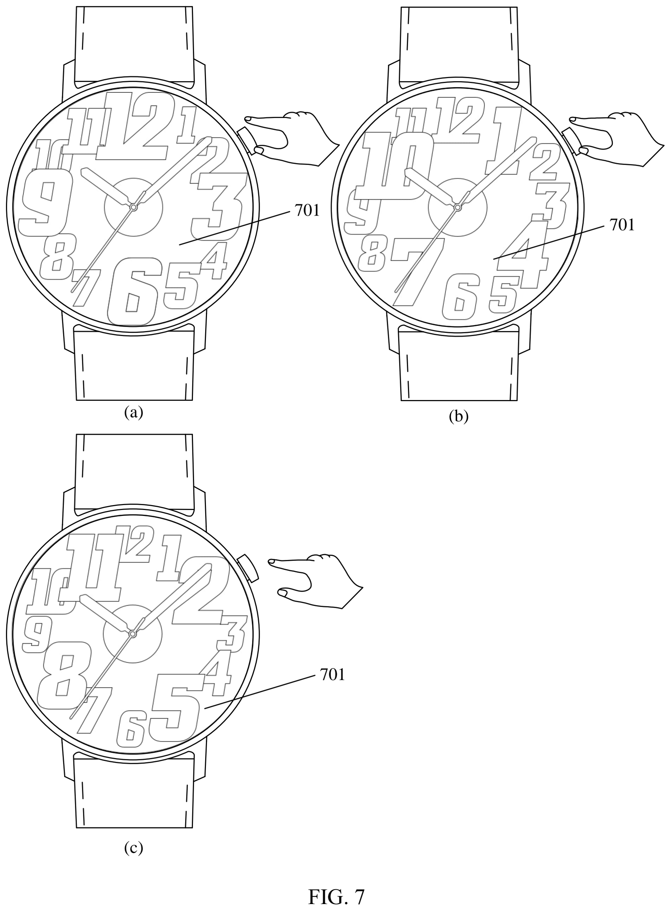

FIG. 7 shows a group of GUIs according to an embodiment of this application.

As shown in (a) in FIG. 7, the smartwatch displays an interface 701, and the interface 701 is the watch face interface. The interface 701 includes a clock. Numbers on the clock can be classified into three groups of number groups, where 12, 3, 6, and 9 are in a first group, 1, 4, 7, and 10 are in a second group, and 2, 5, 8, and 11 are in a third group. It can be seen from (a) in FIG. 7 that a size of a number in the third group is greater than a size of a number in the second group, and a size of a number in the first group is greater than the size of the number in the third group.

Optionally, in some embodiments, brightness of the number in the third group is greater than brightness of the number in the second group, and brightness of the number in the first group is greater than the brightness of the number in the third group.

Alternatively, in some embodiments, a size of a number in the first group, a size of a number in the second group, and a size of a number in the third group are the same, but brightness of the number in the third group is greater than brightness of the number in the second group, and brightness of the number in the first group is greater than the brightness of the number in the third group.

Optionally, in some embodiments, the number in the third group may be superimposed on the number in the second group, and the number in the first group may be superimposed on the number in the second group.

As shown in (a) and (b) in FIG. 7, the smartwatch detects an operation of rotating the crown by the user, and in response to the operation, the smartwatch may adjust the three groups of number groups, to enable the size of the number in the second group to be greater than the size of the number in the first group, and the size of the number in the first group to be greater than the size of the number in the third group.

Optionally, in some embodiments, after the three groups of number groups are adjusted, the brightness of the number in the second group is greater than the brightness of the number in the first group, and the brightness of the number in the first group is greater than the brightness of the number in the third group.

Optionally, in some embodiments, after the three groups of number groups are adjusted, the number in the second group may be superimposed on the number in the first group, and the number in the first group may be superimposed on the number in the third group.

Alternatively, in some embodiments, before the three groups of number groups are adjusted, when the size of the number in the first group, the size of the number in the second group, and the size of the number in the third group are the same, but the brightness of the number in the third group is greater than the brightness of the number in the second group, and the brightness of the number in the first group is greater than the brightness of the number in the third group, after the three groups of number groups are adjusted, the brightness of the number in the second group is greater than the brightness of the number in the first group, and the brightness of the number in the first group is greater than the brightness of the number in the third group.

Optionally, in some embodiments, the smartwatch may further detect a rotation angle. When determining that the rotation angle is greater than a first threshold, the smartwatch may adjust the three groups of number groups. For example, an example in which the first threshold is 60° is used. When detecting that an angle at which the user rotates the crown is 60°, the smartwatch may adjust the three groups of number groups.

When the user continues to rotate the crown, the smartwatch may continue to adjust the three groups of number groups. As shown in (b) and (c) in FIG. 7, the smartwatch detecting the operation of continuing to rotate the crown by the user, and in response to the operation, the smartwatch may adjust the three groups of number groups, to enable the size of the number in the third group to be greater than the size of the number in the second group, and the size of the number in the second group to be greater than the size of the number in the first group.

For example, the example in which the first threshold is 60° is still used. When detecting that an angle at which the user continues to rotate the crown is 60°, the smartwatch may adjust the three groups of number groups for a second time.

Optionally, in some embodiments, after the three groups of number groups are adjusted for a second time, the brightness of the number in the third group is greater than the brightness of the number in the second group, and the brightness of the number in the second group is greater than the brightness of the number in the first group.

Optionally, in some embodiments, after the three groups of number groups are adjusted for a second time, the number in the third group may be superimposed on the number in the second group, and the number in the second group may be superimposed on the number in the first group.

Alternatively, in some embodiments, before the three groups of number groups are adjusted for a second time, when the size of the number in the first group, the size of the number in the second group, and the size of the number in the third group are the same, but the brightness of the number in the second group is greater than the brightness of the number in the first group, and the brightness of the number in the first group is greater than the brightness of the number in the third group, after the three groups of number groups are adjusted for a second time, the brightness of the number in the third group is greater than the brightness of the number in the second group, and the brightness of the number in the second group is greater than the brightness of the number in the first group.

In this embodiment of this application, when the smartwatch adjusts the sizes and/or the brightness of the three groups of number groups, the following two possible implementations may be included.

In a possible implementation, the smartwatch gradually adjusts the sizes and/or the brightness of the three groups of number groups based on rotation of the crown.

For example, it is assumed that the size of the first number group before adjustment is a size #1, and the size after adjustment is a size #2. In this possible implementation, the size of the first number group may be first changed from the size #1 to a size #3, from the size #3 to a size #4, and then from the size #4 to the size #2.

In a possible implementation, the smartwatch directly adjusts the sizes and/or the brightness of the three groups of number groups.

For example, it is assumed that the size of the first number group before adjustment is a size #1, and the size after adjustment is a size #2. In this possible implementation, the size of the first number group is directly changed from the size #1 to the size #2.

It should be noted that numbers in the GUIs shown in FIG. 7 are examples of Arabic numerals. However, this is not limited in embodiments of this application. In some other embodiments of this application, the numbers on the clock may alternatively be Greek numerals, English numerals, Chinese numerals, or the like.

It should be further noted that in the GUIs shown in FIG. 7, only an example in which the numbers on the clock are classified into three groups is used. However, this should not be understood as a specific limitation on embodiments of this application. In some other embodiments of this application, the numbers on the clock may be further classified into two groups, four groups, five groups, six groups, and the like.

In this embodiment of this application, the smartwatch may display, on the watch face interface, an object that can interact with the user. The smartwatch may control, based on the operation of rotating the crown by the user, the object on the watch face interface to interact with the user. This can enhance interaction between the smartwatch and the user, make interaction more interesting, and help improve user experience.

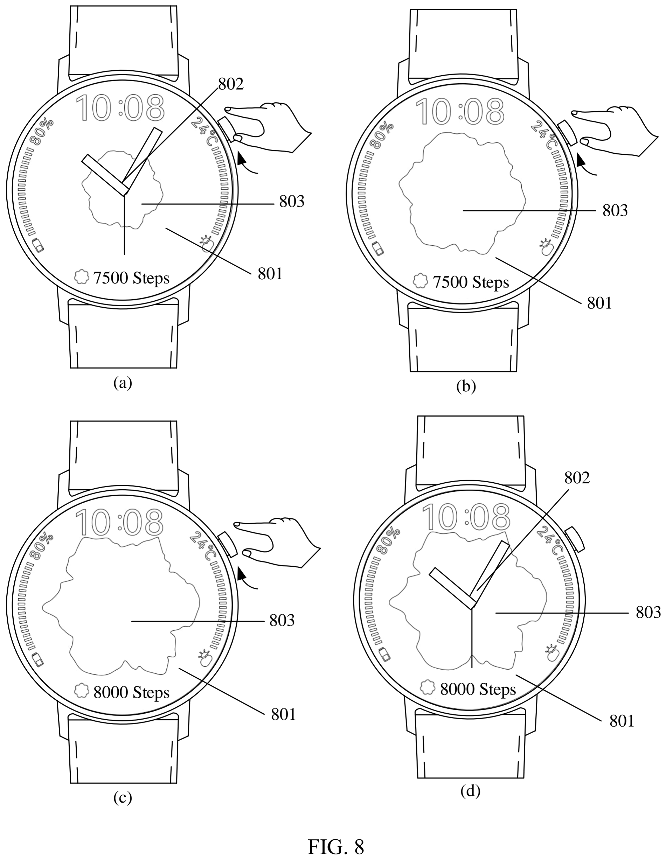

FIG. 8 shows a group of GUIs according to an embodiment of this application.

As shown in (a) and (b) in FIG. 8, the smartwatch displays an interface 801, and the interface 801 is the watch face interface. The interface 801 includes clock hands 802 and a pattern 803. When detecting an operation of rotating the crown by the user, the smartwatch determines a rotation direction. When the rotation direction is a first direction, the smartwatch may cancel display of the clock hands 802 and zoom in the pattern 803.

As shown in (b) and (c) in FIG. 8, when the smartwatch detects that the user continues to rotate the crown, and the rotation direction is the first direction, the smartwatch may continue to zoom in the pattern 803.

It may be understood that when the user changes the rotation direction from the first direction to a second direction, the smartwatch may zoom out the pattern 803.

In some embodiments, the first direction is a clockwise direction, and the second direction is a counterclockwise direction.

In some other embodiments, the first direction is a counterclockwise direction, and the second direction is a clockwise direction.

Optionally, in some embodiments, the pattern 803 is a floral pattern. A size of the closed floral pattern is less than a size of the open floral pattern. In this case, zooming in the pattern 803 may be understood as opening the floral pattern, and zooming out the pattern 803 may be understood as closing the floral pattern.

As shown in (c) and (d) in FIG. 8, when detecting that the user no longer rotates the crown, the smartwatch may display the clock hands 802.

In this embodiment of this application, the smartwatch may display, on the watch face interface, an object that can interact with the user. The smartwatch may control, based on the operation of rotating the crown by the user, the object on the watch face interface. This can enhance interaction between the smartwatch and the user, make interaction more interesting, and help improve user experience.

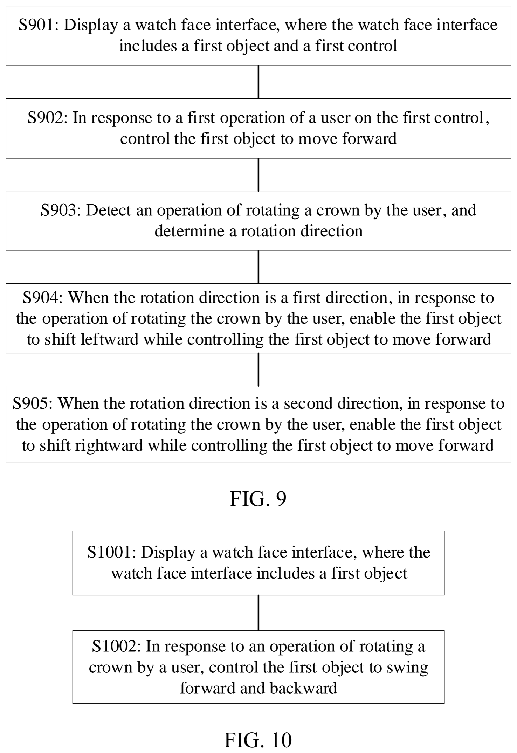

The foregoing describes the interaction method provided in embodiments of this application with reference to GUIs. The following describes the interaction method provided in embodiments of this application with reference to schematic flowcharts shown in FIG. 9 to FIG. 14.

FIG. 9 is a schematic flowchart of the interaction method according to an embodiment of this application. As shown in FIG. 9, the method includes the following steps.

S901: Display a watch face interface, where the watch face interface includes a first object and a first control.

For example, as shown in (a) in FIG. 3, the smartwatch displays the interface 301, and the interface 301 includes the object 302 and the control 303.

S902: In response to a first operation of a user on the first control, control the first object to move forward.

For example, as shown in (a) and (b) in FIG. 3, in response to the operation of tapping the control 303 by the user, the smartwatch controls the object 302 to move forward.

S903: Detect an operation of rotating a crown by the user, and determine a rotation direction.

S904: When the rotation direction is a first direction, in response to the operation of rotating the crown by the user, enable the first object to shift leftward while controlling the first object to move forward.

S905: When the rotation direction is a second direction, in response to the operation of rotating the crown by the user, enable the first object to shift rightward while controlling the first object to move forward.

For example, as shown in (c) and (d) in FIG. 3, the smartwatch may control the object 302 to shift leftward or rightward based on the rotation direction of the user.

In this embodiment of this application, the smartwatch may display, on the watch face interface, an object that can interact with the user. The smartwatch may control, based on the direction in which the user rotates the crown, the object on the watch face interface to interact with the user. This can enhance interaction between the smartwatch and the user, make interaction more interesting, and help improve user experience.

Optionally, in some embodiments, the first direction is a clockwise direction, and the second direction is a counterclockwise direction.

Optionally, in some embodiments, the method further includes: displaying a forward movement distance of the first object on the first control.

For example, as shown in (c) and (d) in FIG. 3, the smartwatch displays a movement distance of the object 302 on the control 303.

Optionally, in some embodiments, the method further includes: in response to a second operation of the user on the first control, controlling the first object to stop moving forward.

For example, as shown in (d) and (e) in FIG. 3, after detecting that the user taps the control 303 again, the smartwatch controls the object 303 to stop moving forward.

Optionally, in some embodiments, a forward movement speed of the first object increases as movement time increases.

Optionally, in some embodiments, the method further includes: when the first object stops moving forward, displaying indication information, where the indication information indicates a movement distance of the first object.

For example, as shown in (f) in FIG. 3, the smartwatch displays prompt information in the prompt box 304, and the prompt information indicates the movement distance of the object 302.

FIG. 10 is a schematic flowchart of the interaction method according to an embodiment of this application. As shown in FIG. 10, the method includes the following steps.

S1001: Display a watch face interface, where the watch face interface includes a first object.

S1002: In response to an operation of rotating a crown by a user, control the first object to swing forward and backward.

For example, as shown in (a) and (b) in FIG. 6, the smartwatch displays the interface 601. The interface 601 includes the object 602. In response to the operation of rotating the crown by the user, the smartwatch controls the object 602 to swing forward and backward.

Optionally, in some embodiments, the method further includes: detecting a rotation angle of the crown.

In S1002, in response to the operation of rotating the crown by the user, controlling the first object to swing forward and backward includes:
determining a swinging speed based on the rotation angle, and controlling the first object to swing forward and backward at the swinging speed.

In this embodiment of this application, the smartwatch may display, on the watch face interface, an object that can interact with the user. The smartwatch may control, based on the operation of rotating the crown by the user, the object on the watch face interface to interact with the user. This can enhance interaction between the smartwatch and the user, make interaction more interesting, and help improve user experience.

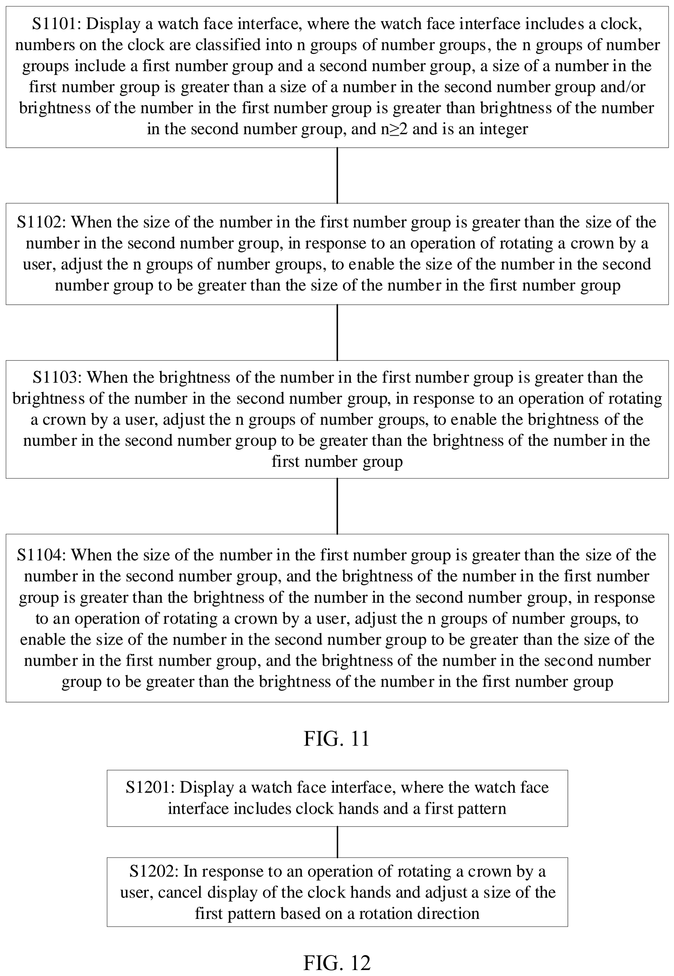

FIG. 11 is a schematic flowchart of the interaction method according to an embodiment of this application. As shown in FIG. 11, the method includes the following steps.

S1101: Display a watch face interface, where the watch face interface includes a clock, numbers on the clock are classified into n groups of number groups, the n groups of number groups include a first number group and a second number group, a size of a number in the first number group is greater than a size of a number in the second number group and/or brightness of the number in the first number group is greater than brightness of the number in the second number group, and n≥2 and is an integer.

S1102: When the size of the number in the first number group is greater than the size of the number in the second number group, in response to an operation of rotating a crown by a user, adjust the n groups of number groups, to enable the size of the number in the second number group to be greater than the size of the number in the first number group.

S1103: When the brightness of the number in the first number group is greater than the brightness of the number in the second number group, in response to an operation of rotating a crown by a user, adjust the n groups of number groups, to enable the brightness of the number in the second number group to be greater than the brightness of the number in the first number group.

S1104: When the size of the number in the first number group is greater than the size of the number in the second number group, and the brightness of the number in the first number group is greater than the brightness of the number in the second number group, in response to an operation of rotating a crown by a user, adjust the n groups of number groups, to enable the size of the number in the second number group to be greater than the size of the number in the first number group, and the brightness of the number in the second number group to be greater than the brightness of the number in the first number group.

For example, as shown in (a) and (b) in FIG. 7, the smartwatch displays the interface 701. The interface 701 includes the clock. The smartwatch groups 3, 6, 9, and 12 into the first number group, and groups 1, 4, 7, and 10 into the second number group. The size and/or the brightness of the number in the first number group is greater than the size and/or the brightness of the number in the second number group. When detecting the operation of rotating the crown by the user, the smartwatch may adjust the first number group and the second number group, to enable the size and/or the brightness of the number in the second number group to be greater than the size and/or the brightness of the number in the first number group.

Optionally, in some embodiments, n≥3, and the n groups of number groups further include a third number group. Before the n groups of number groups are adjusted, a size of a number in the third number group is greater than the size of the number in the second number group and less than the size of the number in the first number group and/or brightness of the number in the third number group is greater than the brightness of the number in the second number group and less than the brightness of the number in the first number group. After the n groups of number groups are adjusted, the size of the number in the second number group is greater than the size of the number in the first number group, and the size of the number in the first number group is greater than the size of the number in the third number group.

Alternatively, the brightness of the number in the second number group is greater than the brightness of the number in the first number group, and the brightness of the number in the first number group is greater than the brightness of the number in the third number group.

Alternatively, the size of the number in the second number group is greater than the size of the number in the first number group, the size of the number in the first number group is greater than the size of the number in the third number group, the brightness of the number in the second number group is greater than the brightness of the number in the first number group, and the brightness of the number in the first number group is greater than the brightness of the number in the third number group.

For example, as shown in (a) and (b) in FIG. 7, the smartwatch displays the interface 701. The interface 701 includes the clock. The smartwatch groups 3, 6, 9, and 12 into the first number group, groups 1, 4, 7, and 10 into the second number group, and groups 2, 5, 8, and 11 into the third number group. The size and/or the brightness of the number in the first number group is greater than the size and/or the brightness of the number in the second number group and the size and/or the brightness of the number in the third number group, and the size and/or the brightness of the number in the third number group is greater than the size and/or the brightness of the number in the second number group. When detecting the operation of rotating the crown by the user, the smartwatch may adjust the first number group, the second number group, and the third number group, to enable the size and/or the brightness of the number in the second number group to be greater than the size and/or the brightness of the number in the first number group and the size and/or the brightness of the number in the third number group, and also enable the size and/or the brightness of the number in the first number group to be greater than the size and/or the brightness of the number in the third number group and the size and/or the brightness of the number in the third number group.

Optionally, in some embodiments, the method further includes: detecting a rotation angle of the crown.

In response to the operation of rotating the crown by the user includes:
when the rotation angle is greater than a first threshold, in response to the operation of rotating the crown by the user, adjusting the n groups of number groups.

Optionally, in some embodiments, in a process of adjusting the n groups of numbers, brightness and/or sizes of numbers in the n groups of number groups gradually change.

In this embodiment of this application, the smartwatch may display, on the watch face interface, an object that can interact with the user. The smartwatch may control, based on the operation of rotating the crown by the user, the object on the watch face interface to interact with the user. This can enhance interaction between the smartwatch and the user, make interaction more interesting, and help improve user experience.

FIG. 12 is a schematic flowchart of the interaction method according to an embodiment of this application. As shown in FIG. 12, the method includes the following steps.

S1201: Display a watch face interface, where the watch face interface includes clock hands and a first pattern.

S1202: In response to an operation of rotating a crown by a user, cancel display of the clock hands and adjust a size of the first pattern based on a rotation direction.

For example, as shown in (a) and (b) in FIG. 8, the smartwatch displays the interface 801. The interface 801 includes the clock hands 802 and the pattern 803. When detecting the operation of rotating the crown by the user, the smartwatch may cancel the clock hands 802, and adjust the size of the pattern 803 based on the rotation direction.

Optionally, in some embodiments, the first pattern is a floral pattern. Adjusting the size of the first pattern based on the rotation direction includes:
adjusting open and closed states of the floral pattern based on the rotation direction, where a size of the closed floral pattern is less than a size of the open floral pattern.

Optionally, in some embodiments, in response to the operation of rotating the crown by the user, adjusting the size of the first image based on the rotation direction includes: when the rotation direction is a first direction, increasing the size of the first image, and when the rotation direction is a second direction, decreasing the size of the first image.

Optionally, in some embodiments, the first direction is a clockwise direction, and the second direction is a counterclockwise direction.

Optionally, in some embodiments, the method further includes: when it is detected that the user no longer rotates the crown, displaying the clock hands.

In this embodiment of this application, the smartwatch may display, on the watch face interface, an object that can interact with the user. The smartwatch may control, based on the direction in which the user rotates the crown, the object on the watch face interface to interact with the user. This can enhance interaction between the smartwatch and the user, make interaction more interesting, and help improve user experience.

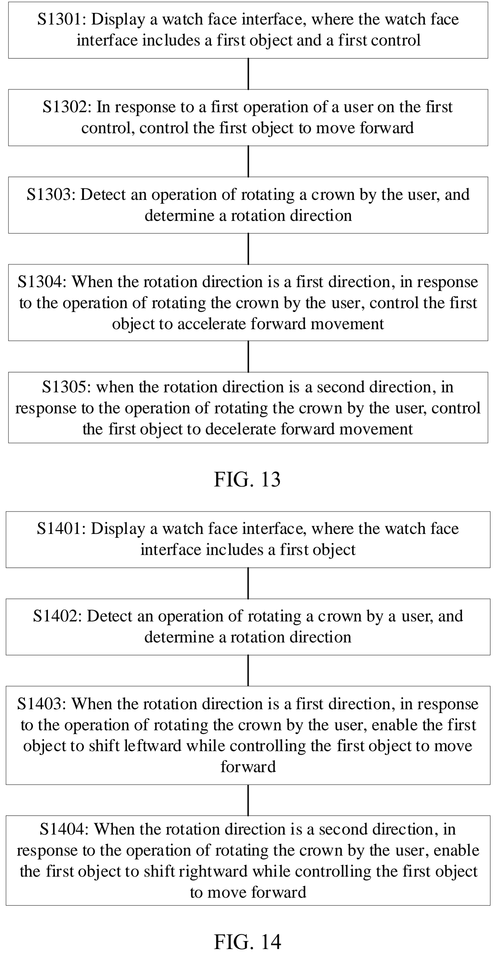

FIG. 13 is a schematic flowchart of the interaction method according to an embodiment of this application. As shown in FIG. 13, the method includes the following steps.

S1301: Display a watch face interface, where the watch face interface includes a first object and a first control.

S1302: In response to a first operation of a user on the first control, control the first object to move forward.

S1303: Detect an operation of rotating a crown by the user, and determine a rotation direction.

S1304: When the rotation direction is a first direction, in response to the operation of rotating the crown by the user, control the first object to accelerate forward movement.

S1305: when the rotation direction is a second direction, in response to the operation of rotating the crown by the user, control the first object to decelerate forward movement.

For example, as shown in (a) to (d) in FIG. 4, the smartwatch displays the interface 401. The interface 401 includes the object 402 and the control 403. When detecting the operation of tapping the control 403 by the user, the smartwatch may control the object 402 to move forward. When it is detected that the user rotates the crown, and the rotation direction is the first direction, the object 402 is controlled to accelerate forward movement. When it is detected that the user rotates the crown, and the rotation direction is the second direction, the object 402 is controlled to decelerate forward movement.

Optionally, in some embodiments, the first direction is a clockwise direction, and the second direction is a counterclockwise direction.

Optionally, in some embodiments, the method further includes: displaying a movement speed of the first object on the first control.

In this embodiment of this application, the smartwatch may display, on the watch face interface, an object that can interact with the user. The smartwatch may control, based on the direction in which the user rotates the crown, the object on the watch face interface to interact with the user. This can enhance interaction between the smartwatch and the user, make interaction more interesting, and help improve user experience.

FIG. 14 is a schematic flowchart of the interaction method according to an embodiment of this application. As shown in FIG. 14, the method includes the following steps.

S1401: Display a watch face interface, where the watch face interface includes a first object.

S1402: Detect an operation of rotating a crown by a user, and determine a rotation direction.

S1403: When the rotation direction is a first direction, in response to the operation of rotating the crown by the user, enable the first object to shift leftward while controlling the first object to move forward.

S1404: When the rotation direction is a second direction, in response to the operation of rotating the crown by the user, enable the first object to shift rightward while controlling the first object to move forward.

For example, as shown in (a) to (d) in FIG. 5, the smartwatch displays the interface 501, and the interface 501 includes the object 502. When the smartwatch detects that the user rotates the crown, and the rotation direction is the first direction, the smartwatch controls the object 402 to move forward and shift leftward. When it is detected that the user rotates the crown, and the rotation direction is the second direction, the object 402 is controlled to move forward and shift rightward.

In this embodiment of this application, the smartwatch may display, on the watch face interface, an object that can interact with the user. The smartwatch may control, based on the direction in which the user rotates the crown, the object on the watch face interface to interact with the user. This can enhance interaction between the smartwatch and the user, make interaction more interesting, and help improve user experience.

An embodiment of this application provides a computer program product. When the computer program product runs on a smartwatch, the smartwatch is enabled to perform the technical solutions in the foregoing embodiments. An implementation principle and technical effect of the computer program product are similar to those of the foregoing method related embodiments. Details are not described herein again.

An embodiment of this application provides a readable storage medium. The readable storage medium includes instructions. When the instructions are run on a smartwatch, the smartwatch is enabled to perform the technical solutions of the foregoing embodiments. An implementation principle and technical effect of the readable storage medium are similar. Details are not described herein again.

An embodiment of this application provides a chip. The chip is configured to execute instructions. When the chip runs, the technical solutions in the foregoing embodiments are performed. An implementation principle and technical effect of the chip are similar. Details are not described herein again.

A person of ordinary skill in the art may be aware that in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments ofthis application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. An interaction method, wherein the method is applied to a smartwatch, and the method comprises:
displaying a watch face interface, wherein the watch face interface comprises a first object and a first control;
in response to a first operation of a user on the first control, controlling the first object to move forward;
detecting an operation of rotating a crown by the user, and determining a rotation direction;
when the rotation direction is a first direction, in response to the operation of rotating the crown by the user, enabling the first object to shift leftward while controlling the first object to move forward; and
when the rotation direction is a second direction, in response to the operation of rotating the crown by the user, enabling the first object to shift rightward while controlling the first object to move forward.

2. The method according to claim 1, wherein the first direction is a clockwise direction, and the second direction is a counterclockwise direction.

3. The method according to claim 1 or 2, wherein the method further comprises:
displaying a forward movement distance of the first object on the first control.

4. The method according to any one of claims 1 to 3, wherein the method further comprises:
in response to a second operation of the user on the first control, controlling the first object to stop moving forward.

5. The method according to any one of claims 1 to 4, wherein a forward movement speed of the first object increases as movement time increases.

6. The method according to claim 4, wherein the method further comprises:
when the first object stops moving forward, displaying indication information, wherein the indication information indicates a movement distance of the first object.

7. An interaction method, wherein the method is applied to a smartwatch, and the method comprises:
displaying a watch face interface, wherein the watch face interface comprises a first object; and
in response to an operation of rotating a crown by a user, controlling the first object to swing forward and backward.

8. The method according to claim 7, wherein the method further comprises:
detecting a rotation angle of the crown; and
in response to the operation of rotating the crown by the user, controlling the first object to swing forward and backward comprises:
determining a swinging speed based on the rotation angle, and controlling the first object to swing forward and backward at the swinging speed.

9. The method according to claim 7 or 8, wherein the method further comprises:
detecting that the user no longer rotates the crown, and controlling the first object to stop swinging forward and backward.

10. An interaction method, wherein the method is applied to a smartwatch, and the method comprises:
displaying a watch face interface, wherein the watch face interface comprises a clock, numbers on the clock are classified into n groups of number groups, the n groups of number groups comprise a first number group and a second number group, a size of a number in the first number group is greater than a size of a number in the second number group and/or brightness of the number in the first number group is greater than brightness of the number in the second number group, and n≥2 and is an integer; and
when the size of the number in the first number group is greater than the size of the number in the second number group, in response to an operation of rotating a crown by a user, adjusting the n groups of number groups, to enable the size of the number in the second number group to be greater than the size of the number in the first number group; or
when the brightness of the number in the first number group is greater than the brightness of the number in the second number group, in response to an operation of rotating a crown by a user, adjusting the n groups of number groups, to enable the brightness of the number in the second number group to be greater than the brightness of the number in the first number group; or
when the size of the number in the first number group is greater than the size of the number in the second number group, and the brightness of the number in the first number group is greater than the brightness of the number in the second number group, in response to an operation of rotating a crown by a user, adjusting the n groups of number groups, to enable the size of the number in the second number group to be greater than the size of the number in the first number group, and the brightness of the number in the second number group to be greater than the brightness of the number in the first number group.

11. The method according to claim 10, wherein n≥3, the n groups of number groups further comprise a third number group, before the n groups of number groups are adjusted, a size of a number in the third number group is greater than the size of the number in the second number group and less than the size of the number in the first number group and/or brightness of the number in the third number group is greater than the brightness of the number in the second number group and less than the brightness of the number in the first number group, and after the n groups of number groups are adjusted, the size of the number in the second number group is greater than the size of the number in the first number group, and the size of the number in the first number group is greater than the size of the number in the third number group; or
the brightness of the number in the second number group is greater than the brightness of the number in the first number group, and the brightness of the number in the first number group is greater than the brightness of the number in the third number group; or
the size of the number in the second number group is greater than the size of the number in the first number group, the size of the number in the first number group is greater than the size of the number in the third number group, the brightness of the number in the second number group is greater than the brightness of the number in the first number group, and the brightness of the number in the first number group is greater than the brightness of the number in the third number group.

12. The method according to claim 10 or 11, wherein before the n groups of number groups are adjusted, the number in the first number is superimposed on the number in the third number group, the number in the third number group is superimposed on the number in the second number group, and after the n groups of number groups are adjusted, the number in the second number is superimposed on the number in the first number group, and the number in the first number group is superimposed on the number in the third number group.

13. The method according to any one of claims 10 to 12, wherein the method further comprises:
detecting a rotation angle of the crown; and
in response to the operation of rotating the crown by the user, adjusting the n groups of number groups comprises:
when the rotation angle is greater than a first threshold, in response to the operation of rotating the crown by the user, adjusting the n groups of number groups.

14. The method according to any one of claims 10 to 13, wherein the method further comprises:
in a process of adjusting the n groups of numbers, brightness and/or sizes of numbers in the n groups of number groups gradually change.

15. An interaction method, wherein the method is applied to a smartwatch, and the method comprises:
displaying a watch face interface, wherein the watch face interface comprises clock hands and a first pattern; and
in response to an operation of rotating a crown by a user, canceling display of the clock hands and adjusting a size of the first pattern based on a rotation direction.

16. The method according to claim 15, wherein the first pattern is a floral pattern, and adjusting the size of the first pattern based on the rotation direction comprises:
adjusting open and closed states of the floral pattern based on the rotation direction, wherein a size of the closed floral pattern is less than a size of the open floral pattern.

17. The method according to claim 15 or 16, wherein in response to the operation of rotating the crown by the user, adjusting the size of the first image based on the rotation direction comprises:
when the rotation direction is a first direction, increasing the size of the first image, and when the rotation direction is a second direction, decreasing the size of the first image.

18. The method according to claim 17, wherein the first direction is a clockwise direction, and the second direction is a counterclockwise direction.

19. The method according to any one of claims 15 to 18, wherein the method further comprises:
when it is detected that the user no longer rotates the crown, displaying the clock hands.

20. An interaction method, wherein the method is applied to a smartwatch, and the method comprises:
displaying a watch face interface, wherein the watch face interface comprises a first object and a first control;
in response to a first operation of a user on the first control, controlling the first object to move forward;
detecting an operation of rotating a crown by the user, and determining a rotation direction;
when the rotation direction is a first direction, in response to the operation of rotating the crown by the user, controlling the first object to accelerate forward movement; and
when the rotation direction is a second direction, in response to the operation of rotating the crown by the user, controlling the first object to decelerate forward movement.

21. The method according to claim 20, wherein the first direction is a clockwise direction, and the second direction is a counterclockwise direction.

22. The method according to claim 20 or 21, wherein the method further comprises:
displaying a movement speed of the first object on the first control.

23. An interaction method, wherein the method is applied to a smartwatch, and the method comprises:
displaying a watch face interface, wherein the watch face interface comprises a first object;
detecting an operation of rotating a crown by the user, and determining a rotation direction;
when the rotation direction is a first direction, in response to the operation of rotating the crown by the user, enabling the first object to shift leftward while controlling the first object to move forward; and
when the rotation direction is a second direction, in response to the operation of rotating the crown by the user, enabling the first object to shift rightward while controlling the first object to move forward.

24. A smartwatch, comprising one or more processors and one or more memories, wherein the one or more memories store one or more computer programs, the one or more computer programs comprise instructions, and when the instructions are executed by the one or more processors, the method according to any one of claims 1 to 6, 7 to 9, 10 to 14, 15 to 19, and 20 to 22, and claim 23 is performed.

25. A chip, wherein the chip comprises a processor and a communication interface, the communication interface is configured to receive a signal and transmit the signal to the processor, and the processor processes the signal, to enable the method according to any one of claims 1 to 6, 7 to 9, 10 to 14, 15 to 19, and 20 to 22, and claim 23 to be performed.

26. A computer-readable storage medium, wherein the computer-readable storage medium stores computer instructions, and when the computer instructions are run on a smartwatch, the method according to any one of claims 1 to 6, 7 to 9, 10 to 14, 15 to 19, and 20 to 22, and claim 23 is performed.
